# DEMANDE DE BREVET EUROPEEN

(11) **EP 3 012 081 A1**
(43) Date de publication de la demande: **27.04.2016**
(21) Numéro de dépôt: 15191081.7
(22) Date de dépôt: 22.10.2015
(51) Int. Cl.: B29C 45/00, B29C 65/20, B29C 45/26

(54) **MOULE D'INJECTION ET PROCÉDÉ DE FABRICATION DE PIÈCES ASSOCIÉ**

(30) Priorité: 22.10.2014 FR 1460165
(71) Demandeur: JP Grosfilley, 01100 Martignat (FR)
(72) Inventeur: GAUDIN, Philippe, 01100 Groissiat (FR)
(74) Mandataire: Chevalier, Renaud Philippe

(57) **Abrégé**

L'invention concerne un moule d'injection (1) pour la fabrication d'une pièce (100), le moule comprenant :
- au moins un premier corps de moule (2),
- au moins un deuxième corps de moule (3), le premier (2) et le deuxième (3) corps de moule étant positionnés en regard l'un de l'autre,
- au moins un premier plateau (4) présentant au moins partiellement au moins une empreinte de moulage (6) destinée à la formation d'une demi-pièce (101) de pièce (100), le premier plateau (4) étant positionné entre le premier (2) et le deuxième (3) corps de moule,
- au moins un deuxième plateau (5) présentant au moins partiellement au moins une empreinte de moulage (7) destinée à la formation d'une demi-pièce complémentaire (102) de pièce (100), le deuxième plateau (5) étant positionné entre le premier plateau (4) et le deuxième corps de moule (3),

ledit premier plateau (4) étant monté au moins en rotation sur le premier corps de moule (2) de manière à se déplacer dans au moins une position selon laquelle l'empreinte de moulage (6) dudit premier plateau (4) est positionnée en regard de l'empreinte de moulage (7) du deuxième plateau (5), caractérisé en ce que le moule d'injection (1) comprend au moins un organe de chauffe (8) monté mobile.

## Description

L'invention concerne le domaine des moules pour injection de pièces de préférence creuses, notamment les pièces réalisées en deux parties ou demi-pièces jointes l'une à l'autre de manière étanche.

Lesdites demi-pièces peuvent être jointes par l'extérieur par un joint d'étanchéité surmoulé dont le surmoulage peut être réalisé dans le moule d'injection de manière intégrée au procédé d'injection comme décrit dans le brevet français FR 2 794 679 B1. L'inconvénient de ce type de jonction réside dans le fait que les cloisons à l'intérieur du volume creux ne sont pas solidarisées, de sorte qu'il existe un risque de fuite et que la pièce formée est de moindre résistance mécanique. En outre, l'injection d'un joint nécessite souvent l'adjonction d'une unité d'injection supplémentaire sur la machine d'injection ainsi que l'acheminement de la matière par canaux chauds dans le moule.

Les demi-pièces peuvent également être jointes par l'intérieur au moyen d'un équipement de soudure miroir. Dans ce cas, il est nécessaire de sortir les demi-pièces du moule d'injection et de les assembler sur un autre poste utilisant une lame chauffante comme moyen de soudure. L'inconvénient de ce type de jonction réside dans le fait que cette opération augmente les coûts dans la mesure où un poste est entièrement créé et dédié à la soudure après moulage et qu'il est nécessaire d'avoir une main d'oeuvre auprès de ce poste.

L'invention a pour but de remédier à tout ou partie des inconvénients précités.

L'invention a pour objet un moule d'injection pour la fabrication d'une pièce, le moule comprenant :
- au moins un premier corps de moule,
- au moins un deuxième corps de moule, le premier et le deuxième corps de moule étant positionnés en regard l'un de l'autre,
- au moins un premier plateau présentant au moins partiellement au moins une empreinte de moulage destinée à la formation d'une demi-pièce de pièce, le premier plateau étant positionné entre le premier et le deuxième corps de moule,
- au moins un deuxième plateau présentant au moins partiellement au moins une empreinte de moulage destinée à la formation d'une demi-pièce complémentaire de pièce, le deuxième plateau étant positionné entre le premier plateau et le deuxième corps de moule,
ledit premier plateau étant monté au moins en rotation sur le premier corps de moule de manière à se déplacer dans au moins une position selon laquelle l'empreinte de moulage dudit premier plateau est positionnée en regard de l'empreinte de moulage du deuxième plateau, caractérisé en ce que le moule d'injection comprend au moins un organe de chauffe monté mobile, ledit organe de chauffe étant configuré pour être positionné entre l'empreinte de moulage du premier plateau et l'empreinte de moulage du deuxième plateau lorsque lesdites empreintes de moulage sont agencées en regard l'une de l'autre.

Ainsi, le moule d'injection selon l'invention intègre la fonctionnalité de soudure par l'extérieure et par l'intérieur, ce qui permet de conserver une cadence de production élevée tout en assurant une liaison étanche et fiable des deux demi-pièces formées dans les empreintes de moulage du moule.

Dans la présente invention, on entendra par les termes « corps de moule » les parties de carcasse du moule qui peuvent être mobiles ou fixes.

Dans la présente invention, on entendra par le terme « plateau » n'importe quel support pouvant comprendre au moins partiellement un ou des empreintes de moulage.

Selon une caractéristique de l'invention, l'organe de chauffe est monté en rotation et/ou en translation sur le premier corps de moule ou sur le deuxième corps de moule.

Préférentiellement, l'organe de chauffe est une lame chauffante.

Selon une caractéristique de l'invention, le moule d'injection comprend au moins un premier poste d'injection dans lequel l'empreinte de moulage du premier plateau est remplie pour former une demi-pièce d'une pièce, au moins un deuxième poste d'injection dans lequel l'empreinte de moulage du deuxième plateau est remplie pour former une demi-pièce complémentaire, au moins un poste de soudure dans lequel l'empreinte de moulage du premier plateau est positionnée en regard de l'empreinte de moulage du deuxième plateau, l'organe de chauffe étant positionné au niveau du poste de soudure.

Selon une caractéristique de l'invention, le passage du deuxième poste d'injection au poste de soudure pour le deuxième plateau s'effectue par transfert des demi-pièces ou par rotation du deuxième plateau.

Préférentiellement, le deuxième plateau est monté au moins en rotation sur le premier corps de moule et/ou sur le deuxième corps de moule.

Selon une caractéristique de l'invention, le premier plateau est monté en translation et en rotation sur le premier corps de moule.

Selon une caractéristique de l'invention, le deuxième plateau est monté en translation et en rotation sur le premier corps de moule, le deuxième plateau étant positionné entre le premier plateau et le deuxième corps de moule.

Selon une caractéristique de l'invention, le moule d'injection comprend des moyens d'amenée de matière à injecter prévus pour alimenter une première cavité de moulage formée par l'empreinte de moulage du premier plateau et/ou du deuxième plateau.

Selon une caractéristique de l'invention, ledit moule d'injection comprend au moins un poste d'éjection de pièces formées à partir des empreintes de moulage du premier et du deuxième plateau.

Selon une caractéristique de l'invention, ledit moule d'injection comprend au moins un poste de pose d'un insert.

Selon une caractéristique de l'invention, le moule peut comprendre au moins un moyen d'amenée de matière à injecter configuré pour former un cordon de liaison entre les demi-pièces.

Avantageusement, la réalisation du cordon de liaison est décrite dans le document FR2794679 B1, notamment à la page 3 lignes 17 à 29, page 4 lignes 18 à 29, page 5 ligne 30-31, page 8 lignes 1 à 23, page 9 lignes 19 à 35 et page 10 ligne 5 à 20. Notamment, le moule peut être équipé d'un moyen d'amenée de matière à injecter de manière à injecter le dit cordon de liaison au moment où les demi-pièces sont en regard l'une de l'autre, et en particulier après l'assemblage par contact par l'organe chauffant.

Avantageusement, le cordon de liaison peut comprendre des fonctions supplémentaires de l'ensemble tel qu'une patte pour fixation ou autre fonction, ce qui simplifie la conception du moule.

L'invention a également pour objet un procédé de fabrication d'une pièce au moyen d'un moule d'injection selon l'invention, le procédé de fabrication comportant au moins un cycle de fabrication comprenant les étapes suivantes :
- Injection d'une demi-pièce dans l'empreinte de moulage du premier plateau au sein d'un premier poste d'injection,
- Injection d'une demi-pièce complémentaire dans l'empreinte de moulage du deuxième plateau au sein d'un deuxième poste d'injection,
- Rotation du premier plateau jusqu'au poste de soudure,
- Rotation du deuxième plateau ou transfert de la demi-pièce au niveau du poste de soudure,
- Positionnement de l'organe de chauffe (8) entre les demi-pièces du premier plateau et du deuxième plateau,
- Chauffe des demi-pièces,
- Retrait de l'organe de chauffe,
- Translation du premier plateau et/ou du deuxième plateau pour l'assemblage des demi-pièces chauffées,
- Assemblage par contact des demi-pièces précédemment chauffées de sorte à former une pièce,
- Ejection de la pièce formée.

Selon une caractéristique de l'invention, les étapes d'injection sont réalisées simultanément.

Selon une caractéristique de l'invention, les étapes de rotation ou transfert vers le poste de soudure sont réalisées simultanément.

Selon une caractéristique de l'invention, le cycle de fabrication comprend une étape supplémentaire réalisée avant la rotation du premier plateau jusqu'au poste de soudure et/ou avant la rotation du deuxième plateau jusqu'au poste de soudure, l'étape supplémentaire consistant en la rotation du premier plateau ou du deuxième plateau à un poste de pose d'un insert et à la pose d'un insert dans la demi-pièce du plateau ayant effectué la rotation audit poste de pose d'un insert.

Selon une caractéristique de l'invention, ledit procédé de fabrication comprend plusieurs cycles de fabrication réalisés simultanément. Ainsi, le rendement de fabrication est optimisé.

Selon une caractéristique de l'invention, ledit procédé comprend une étape supplémentaire d'injection d'un cordon de liaison extérieur aux deux demi-pièces. Préférentiellement, l'étape d'injection du cordon est réalisée avant éjection de la pièce assemblée et après l'assemblage par contact des demi-pièces.

L'invention sera mieux comprise, grâce à la description ci-après, qui se rapporte à plusieurs modes de réalisation selon la présente invention, donnés à titre d'exemples non limitatifs et expliqués avec référence aux dessins schématiques annexés, dans lesquels:
- la figure 1 est une vue schématique partielle de dessus du moule d'injection selon un premier mode de réalisation de l'invention,
- la figure 2 est une vue schématique partielle en coupe transversale du moule d'injection représenté en figure 1, pendant le positionnement des demi-pièces à assembler et souder,
- la figure 3 est une vue schématique partielle en coupe transversale du moule représenté en figure 2, pendant la chauffe des zones à assembler sur les demi-pièces,
- la figure 4 est une vue schématique partielle en coupe transversale du moule représenté en figure 2, pendant l'assemblage des demi-pièces,
- la figure 5 est une vue schématique partielle en coupe transversale du moule représenté en figure 2, pendant l'éjection de la pièce,
- la figure 6 est une vue schématique partielle de dessus du moule d'injection selon un deuxième mode de réalisation de l'invention,
- la figure 7 est une vue schématique partielle de dessus du moule d'injection selon un troisième mode de réalisation de l'invention,
- la figure 8 est une vue schématique partielle de dessus du moule d'injection selon une variante du premier mode de réalisation représenté en figure 1,
- la figure 9 est une vue schématique partielle en coupe transversale du moule d'injection représenté en figure 8 pendant le positionnement des demi-pièces à assembler et souder,
- la figure 10 est une vue schématique partielle en coupe transversale du moule d'injection représenté en figure 8 pendant la chauffe des zones à assembler sur les demi-pièces,
- la figure 11 est une vue schématique partielle en coupe transversale du moule représenté en figure 8, pendant l'assemblage des demi-pièces,
- la figure 12 est une vue schématique partielle en coupe transversale du moule d'injection représenté en figure 8 avant la rotation des plateaux moule ouvert,
- la figure 13 est une vue schématique partielle en coupe transversale du moule d'injection représenté en figure 5 pendant la pose d'un insert et en phase d'éjection d'une pièce en moule fermé,
- la figure 14A illustre une vue de détail de la pièce injectée comprenant un cordon de liaison extérieur,
- la figure 14B illustre une vue de détail de la pièce injectée représentée en figure 14A selon une variante de réalisation.

Le moule d'injection 1 selon l'invention et quel que soit le mode de réalisation comprend un premier corps de moule 2 et un deuxième corps de moule 3 positionnés en regard l'un de l'autre. Lorsque le moule d'injection 1 est fermé, le premier corps de moule 2 est positionné contre le deuxième corps de moule 2 de manière étanche afin de réaliser le moulage des pièces.

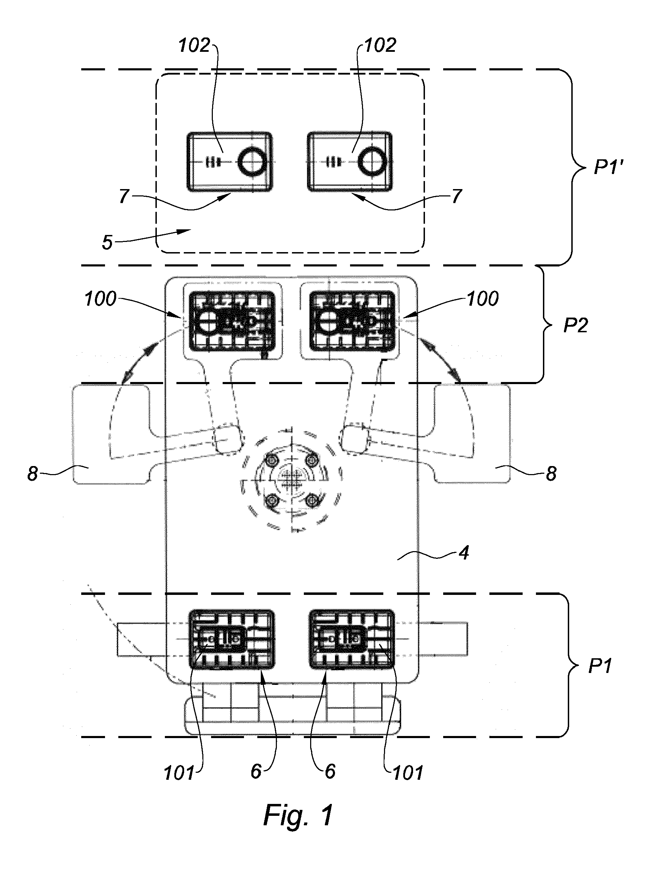

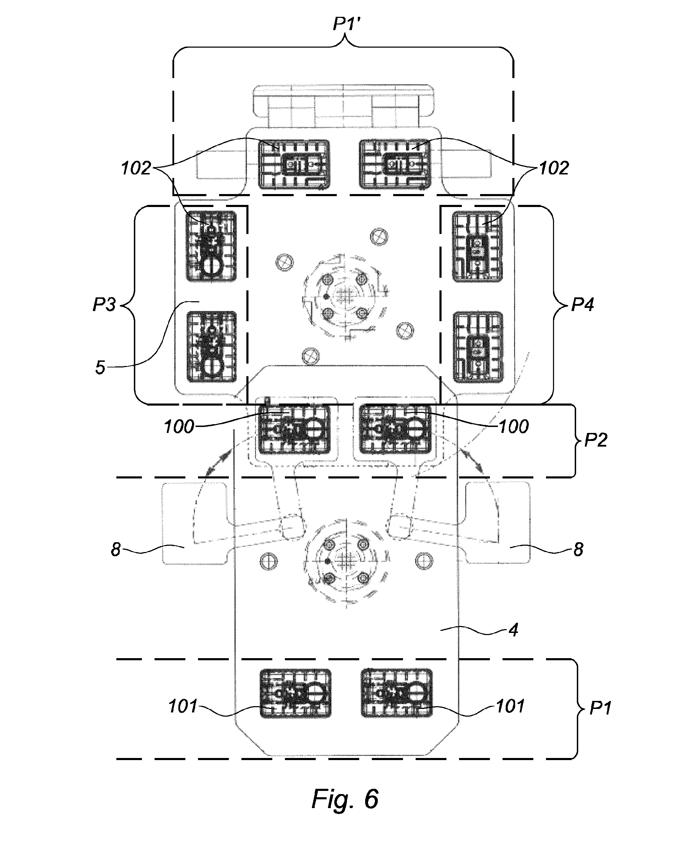

Le moule d'injection 1 comprend en outre un premier plateau 4 et un deuxième plateau 5. Le premier plateau 4 est monté sur le premier corps de moule 2 en rotation et en translation. Le deuxième plateau 5 est positionné entre le premier plateau 4 et le deuxième corps de moule 3. Le deuxième plateau 5 est fixe selon le premier mode de réalisation, comme illustré en figure 1, tandis que dans les deuxième, troisième et quatrième modes de réalisation du moule d'injection 1, le deuxième plateau 5 est monté en rotation et en translation sur le premier corps de moule 2, comme illustré aux figures 6 à 8.

Selon l'un quelconque des modes de réalisation du moule d'injection 1, ledit moule d'injection 1 comprend deux organes de chauffe 8 illustrés aux figures 1, 6, 7, 8. Les organes de chauffe 8 sont sous forme de plaques chauffantes montées pivotantes sur un des corps de moule 2, 3.

En outre, le premier plateau 4 comprend une pluralité d'empreintes de moulage 6 conformées pour la réalisation de demi-pièces 101 de pièce 100, lesdites empreintes de moulage 6 étant partiellement ménagées sur le premier corps de moule 2.

De plus, le deuxième plateau 5 comprend une pluralité d'empreintes de moulage 7 conformées pour la réalisation de demi-pièces complémentaires 102 de pièce 100, lesdites empreintes de moulage 7 étant partiellement ménagées sur le premier corps de moule 2.

Les figures 1 à 5 illustrent un moule d'injection selon un premier mode de réalisation dans lequel le premier plateau 4 est monté en rotation sur le premier corps de moule 2 et le deuxième plateau 5 est fixe. Dans le premier mode de réalisation, le moule d'injection 1 comprend deux postes d'injection P1, P1' et un poste de soudure P2. Chaque poste d'injection P1, P1' correspond à l'injection d'une demi-pièce 101, 102 de pièce 100 à assembler et à souder en poste de soudure P2.

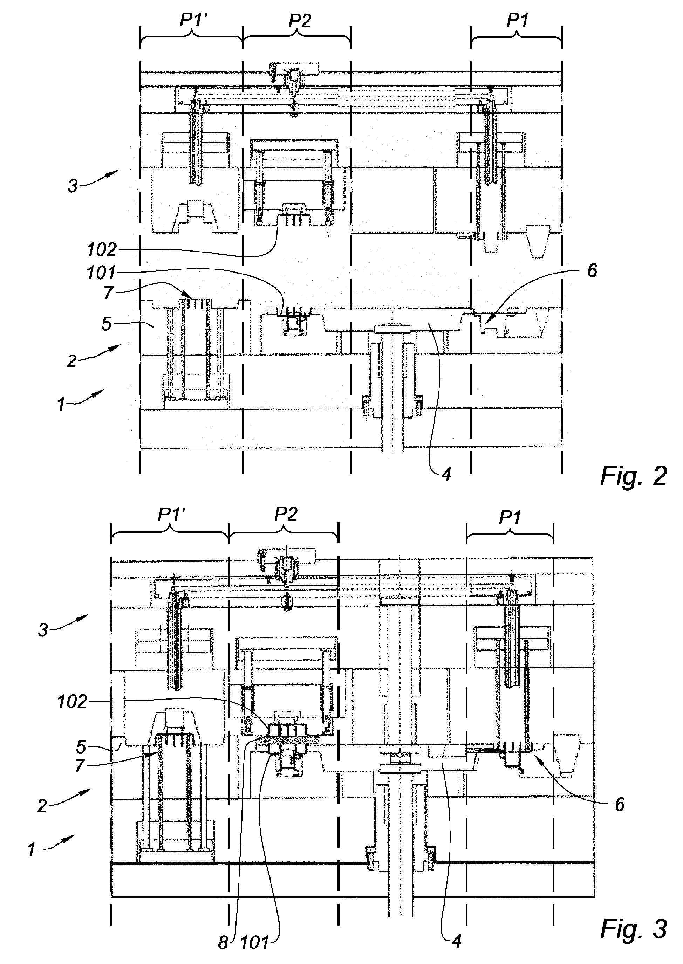

Les figures 2 à 5 illustrent partiellement un cycle de moulage selon l'invention avec un moule d'injection 1 selon le premier mode de réalisation.

Plus particulièrement, préalablement à l'étape illustrée en figure 2, une étape d'injection d'une demi-pièce 101 sur le premier plateau 4 et d'une demi-pièce 102 sur le deuxième plateau 5 a été réalisée respectivement aux postes d'injection P1, P1'.

Puis, comme illustré en figure 2, le premier plateau 4 tourne et amène la demi-pièce 101 créée en poste d'injection P1, vers le poste de soudure P2 et on transfère la demi-pièce complémentaire 102 réalisée sur le deuxième plateau 5 en poste d'injection P1', vers le poste de soudure P2. Les demi-pièces 101, 102 sont positionnées en regard l'une de l'autre.

Ensuite, comme illustré en figure 3, l'organe de chauffe 8 est pivoté et les demi-pièces 101, 102 sont avancées l'une de l'autre jusqu'à ce qu'elles soient en contact ou suffisamment proches de l'organe de chauffe 8 pour être chauffées. En même temps et comme illustré en figure 3, deux autres demi-pièces 101, 102 sont injectées sur le premier et le deuxième plateau 4, 5.

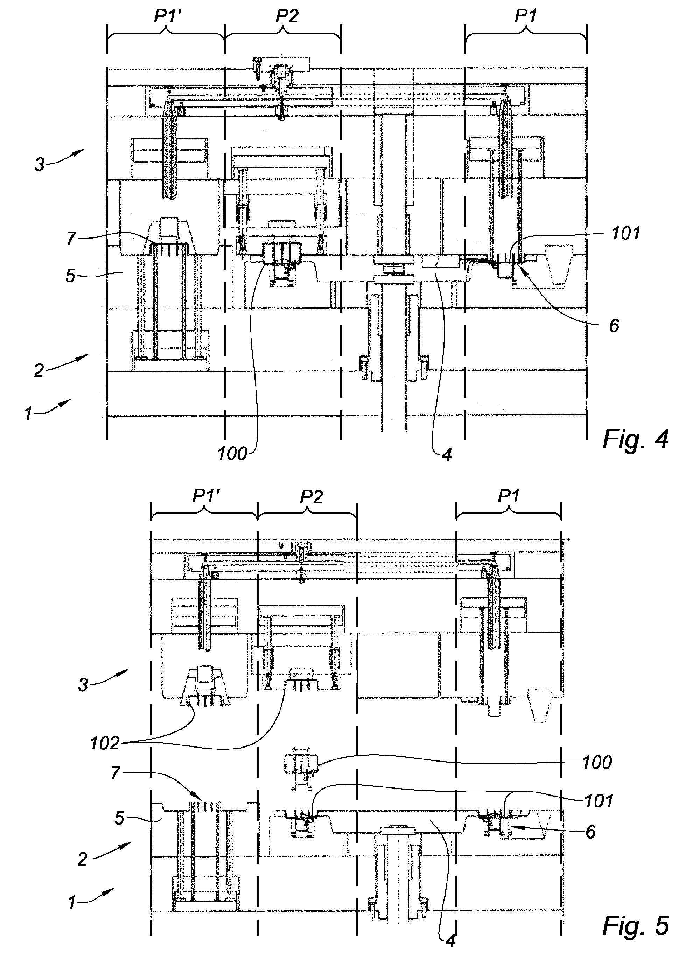

Puis, comme illustré en figure 4, l'organe de chauffe 8 est retiré, et on assemble à chaud les demi-pièces 101, 102. Parallèlement, l'injection se poursuit dans les postes d'injection P1, P1'.

Enfin, on ouvre le moule d'injection 1, et on extrait la pièce 100 réalisée à partir des demi-pièces 101, 102 soudées, comme illustré en figure 5, les demi-pièces formées pendant la soudure de la pièce 100 vont maintenant être assemblées en reprenant les étapes précédemment décrites et illustrées aux figures 2 à 5.

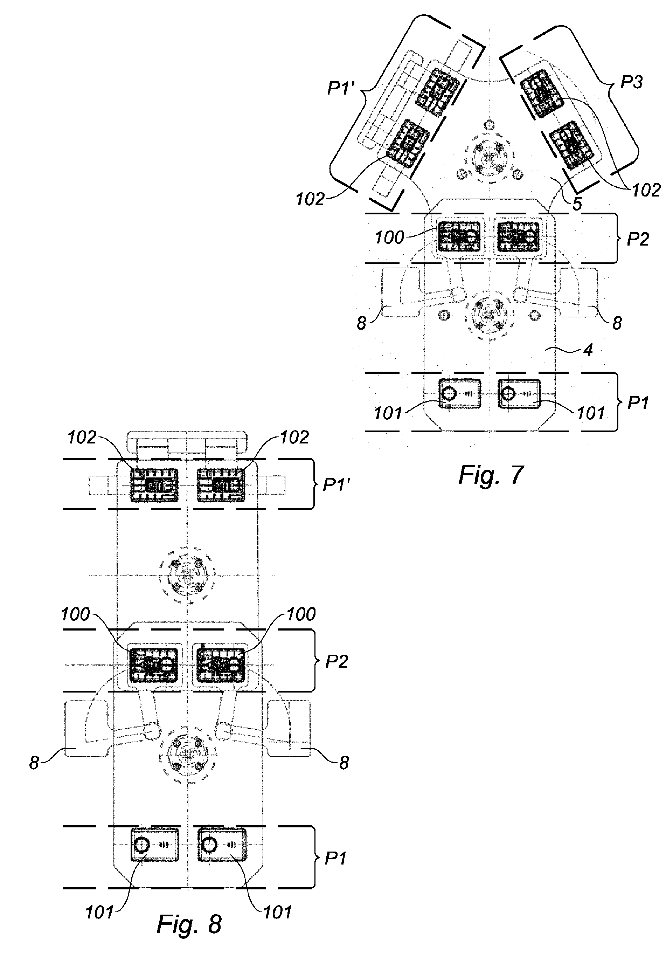

En figure 8, est représenté partiellement un moule d'injection 1 selon une variante du premier mode de réalisation dans laquelle le deuxième plateau 5 est monté en rotation et en translation sur le premier corps de moule 2. Dans la variante de réalisation du premier mode de réalisation représenté en figure 1, le moule d'injection 1 comprend deux postes d'injection P1, P1' et un poste de soudure P2.

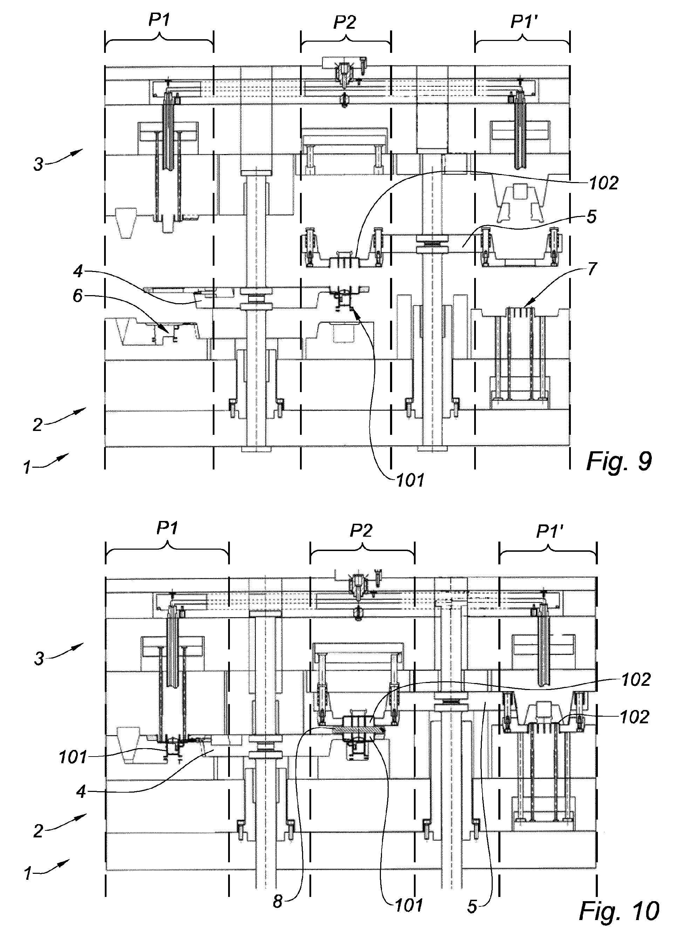

Les figures 9 à 12 illustrent partiellement un cycle de moulage selon l'invention avec un moule d'injection selon la variante du premier mode de réalisation.

Plus particulièrement, préalablement à l'étape illustrée en figure 9, une étape d'injection d'une demi-pièce 101 sur le premier plateau 4 et d'une demi-pièce 102 sur le deuxième plateau 5 a été réalisée respectivement aux postes d'injection P1, P1'.

Puis comme illustré en figure 9, le premier et le deuxième plateau 4, 5, sont tournés de manière à ce que les demi-pièces 101, 102 injectées soient en regard l'une de l'autre au niveau du poste de soudure P2.

Ensuite, comme représenté en figure 10, l'organe de chauffe 8 est positionné entre les demi-pièces 101, 102 et les demi-pièces 101, 102 sont avancées l'une de l'autre jusqu'à ce qu'elles soient en contact ou suffisamment proches de l'organe de chauffe 8 pour être chauffées. En même temps et comme illustré en figure 10, deux autres demi-pièces 101, 102 sont injectées sur le premier et le deuxième plateau 4, 5 aux postes d'injection P1, P1'.

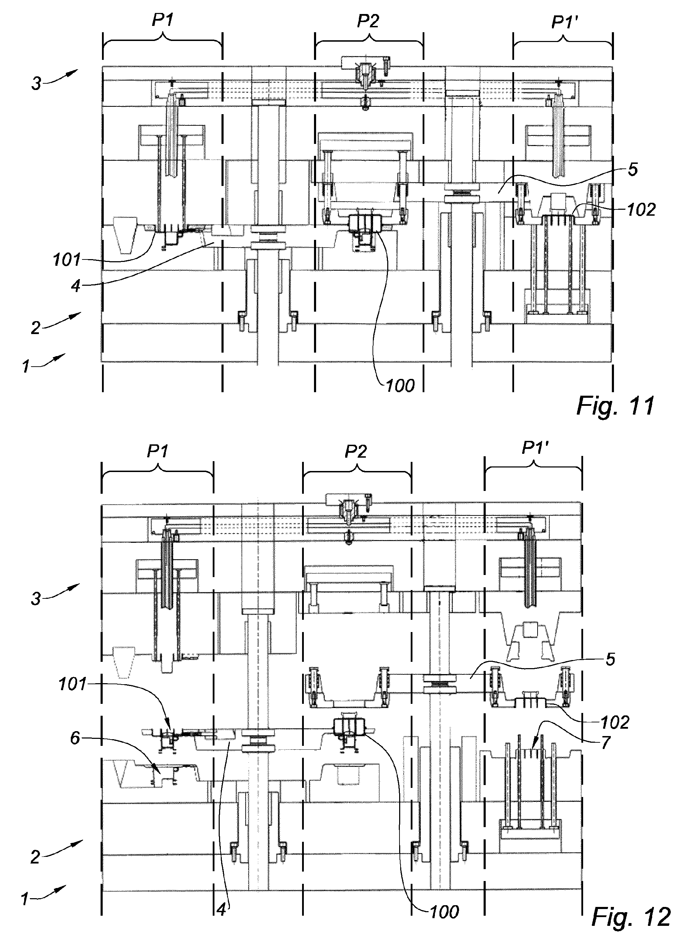

Puis, comme illustré en figure 11, l'organe de chauffe 8 est retiré, et on assemble à chaud les demi-pièces 101, 102. Parallèlement, l'injection se poursuit dans les postes d'injection P1, P1'.

Enfin, on ouvre le moule d'injection 1, et on extrait la pièce 100 réalisée à partir des demi-pièces 101, 102 soudées, comme illustré en figure 12, les demi-pièces formées pendant la soudure de la pièce 100 vont maintenant être assemblées en reprenant les étapes précédemment décrites et illustrées aux figures 9 à 12.

Les cycles de moulage qui viennent d'être décrits pour une pièce 100 sont réalisables pour plusieurs pièces 100 en même temps, en fonction de la configuration des plateaux 4, 5 et du nombre d'empreintes de moulage 6, 7.

En figure 6 est représenté partiellement un moule d'injection 1 selon un deuxième mode de réalisation. Dans le deuxième mode de réalisation, comme dit précédemment, le deuxième plateau 5 est monté en rotation et en translation sur le premier corps de moule 2.

Dans le deuxième mode de réalisation représenté en figure 6, le moule comprend deux postes d'injection P1, P1', un poste de soudure P2, un poste d'éjection P3 des pièces 100 réalisées, un poste de pose d'un insert P4.

Le cycle de moulage est sensiblement identique à ceux décrits en référence aux figures 2 à 5 et 9 à 12, des étapes supplémentaires étant ajoutées pour les postes supplémentaires.

Selon le deuxième mode de réalisation, le moule d'injection 1 comprend un poste d'éjection P3, ainsi, une fois la pièce 100 réalisée, le deuxième plateau 5 sur lequel repose la pièce 100 est tourné en poste d'éjection P3 où la pièce 100 est évacuée soit manuellement soit par transfert.

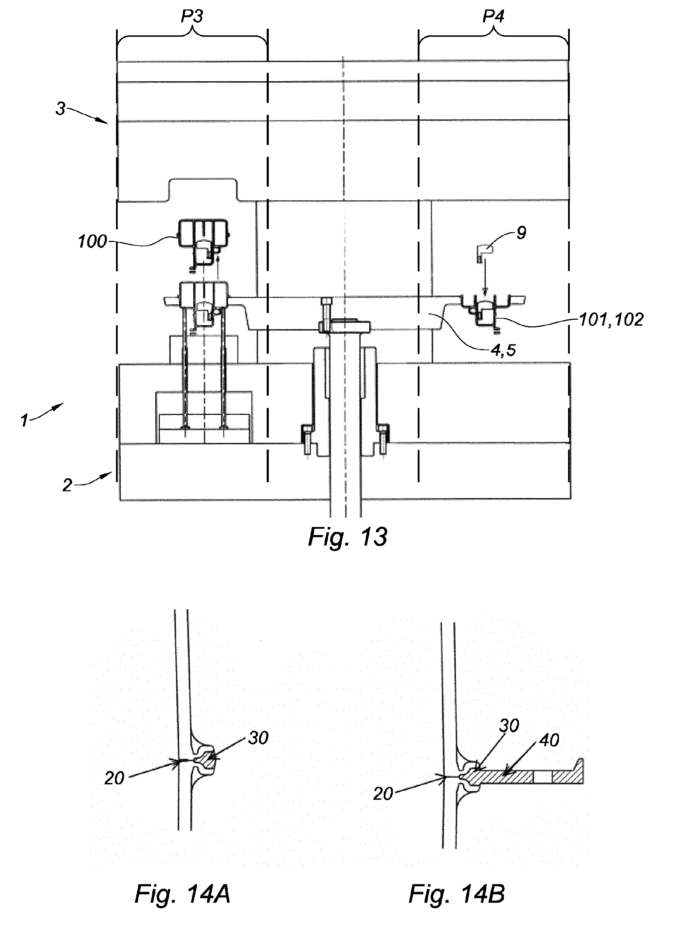

En outre, selon le deuxième mode de réalisation, le moule d'injection 1 comprend un poste de pose d'insert P4 dans une demi-pièce 101, 102. Cette étape est représentée en figure 13. Avant soudure et assemblage en poste de soudure P2, le deuxième ou le premier plateau 4, 5 est tourné en poste de pose d'insert P4. Puis on dispose l'insert 9 dans la demi-pièce 101, 102 et on pivote ledit plateau 4, 5 en poste de soudure P2.

En figure 7, est représenté partiellement un moule d'injection 1 selon un troisième mode de réalisation. Dans le troisième mode de réalisation, comme dit précédemment, le deuxième plateau 5 est monté en rotation et en translation sur le premier corps de moule 2.

En outre, dans le troisième mode de réalisation représenté en figure 7, le moule comprend deux postes d'injections P1, P1', un poste de soudure P2, et un poste d'éjection P3 des pièces 100 réalisées.

En variante non représentée du troisième mode de réalisation, le moule comprend deux postes d'injections P1, P1', un poste de soudure P2, et un poste de pose d'insert P4 dans les demi-pièces 100 réalisées, l'éjection étant manuelle ou mécanique et réalisée au niveau du poste de soudure P2 une fois que les demi-pièces 101, 102 sont assemblées.

Quel que soit le mode de réalisation du moule d'injection 1, le moule peut comprendre un moyen d'amenée (non représenté) de matière à injecter supplémentaire configuré pour former un cordon de liaison 30 extérieur au niveau de la liaison de soudure interne 20.

Le moyen d'amenée est préférentiellement positionné au niveau du poste de soudure P2 ou sur un poste (non représenté) dédié positionné avant le poste d'éjection P3.

La pièce ainsi formée présente une liaison de soudure interne 20 et un cordon de liaison 30 extérieur comme illustré en figure 14A. En variante, le cordon de liaison peut comprendre une patte pour fixation ou autre fonction 40 comme illustré en figure 14B.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Moule d'injection (1) pour la fabrication d'une pièce (100), le moule comprenant :
- au moins un premier corps de moule (2),
- au moins un deuxième corps de moule (3), le premier (2) et le deuxième (3) corps de moule étant positionnés en regard l'un de l'autre,
- au moins un premier plateau (4) présentant au moins partiellement au moins une empreinte de moulage (6) destinée à la formation d'une demi-pièce (101) de pièce (100), le premier plateau (4) étant positionné entre le premier (2) et le deuxième (3) corps de moule,
- au moins un deuxième plateau (5) présentant au moins partiellement au moins une empreinte de moulage (7) destinée à la formation d'une demi-pièce complémentaire (102) de pièce (100), le deuxième plateau (5) étant positionné entre le premier plateau (4) et le deuxième corps de moule (3),
ledit premier plateau (4) étant monté au moins en rotation sur le premier corps de moule (2) de manière à se déplacer dans au moins une position selon laquelle l'empreinte de moulage (6) dudit premier plateau (4) est positionnée en regard de l'empreinte de moulage (7) du deuxième plateau (5), **caractérisé en ce que** le moule d'injection (1) comprend au moins un organe de chauffe (8) monté mobile, ledit organe de chauffe (8) étant configuré pour être positionné entre l'empreinte de moulage (6) du premier plateau (4) et l'empreinte de moulage (7) du deuxième plateau (5) lorsque lesdites empreintes de moulage (6, 7) sont agencées en regard l'une de l'autre.

2. Moule d'injection selon la revendication 1, dans lequel l'organe de chauffe (8) est monté en rotation et/ou en translation sur le premier corps de moule (2) ou sur le deuxième corps de moule (3).

3. Moule d'injection selon l'une quelconque des revendications 1 ou 2, dans lequel l'organe de chauffe (8) est une lame chauffante.

4. Moule d'injection selon l'une quelconque des revendications 1 à 3, dans lequel ledit moule d'injection (1) comprend au moins un premier poste d'injection (P1) dans lequel l'empreinte de moulage (6) du premier plateau (4) est remplie pour former une demi-pièce (101) d'une pièce (100), au moins un deuxième poste d'injection (P1') dans lequel l'empreinte de moulage (7) du deuxième plateau (5) est remplie pour former une demi-pièce complémentaire (102), au moins un poste de soudure (P2) dans lequel l'empreinte de moulage (6) du premier plateau (4) est positionnée en regard de l'empreinte de moulage (7) du deuxième plateau (5), l'organe de chauffe (8) étant positionné au niveau du poste de soudure (P2).

5. Moule d'injection selon l'une quelconque des revendications 1 à 4, dans lequel le deuxième plateau (5) est monté au moins en rotation sur le premier corps de moule (2) et/ou sur le deuxième corps de moule (3).

6. Moule d'injection selon l'une quelconque des revendications 1 à 5, **caractérisé en ce que** ledit moule d'injection (1) comprend au moins un poste d'éjection (P3) de pièces (100) formées à partir des empreintes de moulage (6, 7) du premier plateau (4) et du deuxième plateau (5).

7. Moule d'injection selon l'une quelconque des revendications 1 à 6, **caractérisé en ce que** ledit moule d'injection (1) comprend au moins un poste de pose d'un insert (P4).

8. Procédé de fabrication d'une pièce (100) au moyen d'un moule d'injection (1) selon l'une quelconque des revendications 1 à 7, le procédé de fabrication comportant au moins un cycle de fabrication comprenant les étapes suivantes :
- Injection d'une demi-pièce (101) dans l'empreinte de moulage (6) du premier plateau (4) au sein d'un premier poste d'injection (P1),
- Injection d'une demi-pièce complémentaire (102) dans l'empreinte de moulage (7) du deuxième plateau (5) au sein d'un deuxième poste d'injection (P1'),
- Rotation du premier plateau (4) jusqu'au poste de soudure (P2),
- Rotation du deuxième plateau (5) ou transfert de la demi-pièce au niveau du poste de soudure (P2)
- Positionnement de l'organe de chauffe (8) entre les demi-pièces (101, 102) du premier plateau (4) et du deuxième plateau (5),
- Chauffe des demi-pièces (101, 102),
- Retrait de l'organe de chauffe (8),
- Translation du premier plateau (4) et/ou du deuxième plateau (5) pour l'assemblage des demi-pièces (101, 102) chauffées,
- Assemblage par contact des demi-pièces (101, 102) précédemment chauffées de sorte à former une pièce (100),
- Ejection de la pièce (100) formée.

9. Procédé de fabrication selon la revendication 8, dans lequel le cycle de fabrication comprend une étape supplémentaire réalisée avant la rotation du premier plateau (4) jusqu'au poste de soudure (P2) et/ou avant la rotation du deuxième plateau (5) jusqu'au poste de soudure (P2), l'étape supplémentaire consistant en la rotation du premier plateau (4) ou du deuxième plateau (5) à un poste de pose d'un insert (P4) et à la pose d'un insert (9) dans la demi-pièce (101, 102) du plateau (4, 5) ayant effectué la rotation audit poste de pose d'un insert (P4).

10. Procédé de fabrication selon l'une quelconque des revendications 8 ou 9, dans lequel ledit procédé de fabrication comprend plusieurs cycles de fabrication réalisés simultanément.
